# EUROPEAN PATENT APPLICATION

(11) **EP 4 836 374 A1**
(43) Date of publication of application: **04.11.2026**
(21) Application number: 24910506.5
(22) Date of filing: 28.11.2024
(51) Int. Cl.: H04L 51/23

(54) **INFORMATION INTERACTION METHOD AND APPARATUS, AND COMPUTER READABLE STORAGE MEDIUM**

(30) Priority: 29.12.2023 CN 202311873598
(71) Applicant: Beijing Zitiao Network Technology Co., Ltd., Beijing 100190 (CN)
(72) Inventor: LUO, Chen, Beijing 100028 (CN); ZHANG, Jiaojiao, Beijing 100028 (CN); YANG, Jiarun, Beijing 100028 (CN); AN, Zimeng, Beijing 100028 (CN)
(74) Representative: Grünecker Patent- und Rechtsanwälte PartG mbB
(86) International application number: PCT/CN2024/135161
(87) International publication number: WO 2025/139573

(57) **Abstract**

The present disclosure relates to an information interaction method and apparatus, and a computer-readable storage medium, which relate to the field of computer technology. The information interaction method includes: generating interaction indication information according to an interaction completion condition set by a user who initiates an information interaction; determining whether the interaction completion condition is satisfied according to participation of another user in the information interaction in response to the user sending the interaction indication information to the other user; and feeding back information related to a virtual resource corresponding to the interaction completion condition to the user in response to the interaction completion condition being satisfied.

## Description

### CROSS-REFERENCE TO RELATED APPLICATIONS

The present application is based on and claims the priority to the Chinese patent application No. 202311873598.0 filed on December 29, 2023, the disclosure of which is herein incorporated into this application by reference in its entirety.

### TECHNICAL FIELD

The present disclosure relates to the field of computer technology, and in particular, to an information interaction method, an information interaction apparatus, and a computer-readable storage medium.

### BACKGROUND

Network-based information sharing is generally initiated by a platform that provides a corresponding virtual resource to a user. The user invites another user to participate in an information interaction by sharing information with the other user according to a sharing difficulty designated by the platform.

### SUMMARY

According to some embodiments of the present disclosure, an information interaction method is provided, including: generating interaction indication information according to an interaction completion condition set by a user who initiates an information interaction; determining whether the interaction completion condition is satisfied according to participation of another user in the information interaction in response to the user sending the interaction indication information to the other user; and feeding back information related to a virtual resource corresponding to the interaction completion condition to the user in response to the interaction completion condition being satisfied.

In some embodiments, the interaction completion condition includes at least one of a designated duration or a designated number; and determining whether the interaction completion condition is satisfied according to the participation of the other user in the information interaction includes: determining that the interaction completion condition is satisfied in response to at least one of: a number of participating users who participate in the information interaction among the other user being not less than the designated number, or the participating users participating in the information interaction within the designated duration.

In some embodiments, the virtual resource is determined according to at least one of the designated duration or the designated number.

In some embodiments, the interaction indication information includes password information for participating in the information interaction, and the password information includes a natural language field having designated semantic information.

In some embodiments, the natural language field is generated according to designated semantic information input by the user.

In some embodiments, determining whether the interaction completion condition is satisfied according to the participation of the other user in the information interaction includes: determining that the other user responds to the information interaction in response to at least one of: the other user copying the password information and opening a designated application, or the other user searching for the password information in a designated application.

In some embodiments, determining that the other user responds to the information interaction includes: determining that the other user responds to the information interaction in response to the other user searching for the natural language field in the designated application.

In some embodiments, the password information includes information related to the designated application.

In some embodiments, the natural language field includes a keyword, and the natural language field is used to instruct the other user to search for the keyword in the designated application; and determining whether the interaction completion condition is satisfied according to the participation of the other user in the information interaction includes: determining that the other user responds to the information interaction in response to the other user searching for the keyword in the designated application.

In some embodiments, the information interaction method further includes: showing the virtual resource determined according to the interaction completion condition to the user in response to the user setting the interaction completion condition.

According to some other embodiments of the present disclosure, an information interaction apparatus is provided, including: a generation unit configured to generate interaction indication information according to an interaction completion condition set by a user who initiates an information interaction; a determination unit configured to determine whether the interaction completion condition is satisfied according to participation of another user in the information interaction in response to the user sending the interaction indication information to the other user; and a feedback unit configured to feed back information related to a virtual resource corresponding to the interaction completion condition to the user in response to the interaction completion condition being satisfied.

In some embodiments, the interaction completion condition includes at least one of a designated duration or a designated number; and the determination unit determines that the interaction completion condition is satisfied in response to at least one of: a number of participating users who participate in the information interaction among the other user being not less than the designated number, or the participating users participating in the information interaction within the designated duration.

In some embodiments, the virtual resource is determined according to at least one of the designated duration or the designated number.

In some embodiments, the interaction indication information includes password information for participating in the information interaction, and the password information includes a natural language field having designated semantic information.

In some embodiments, the natural language field is generated according to designated semantic information input by the user.

In some embodiments, the determination unit determines that the other user responds to the information interaction in response to at least one of: the other user copying the password information and opening a designated application, or the other user searching for the password information in a designated application.

In some embodiments, the determination unit determines that the other user responds to the information interaction in response to the other user searching for the natural language field in the designated application.

In some embodiments, the password information includes information related to the designated application.

In some embodiments, the natural language field includes a keyword, and the natural language field is used to instruct the other user to search for the keyword in the designated application; and the determination unit determines that the other user responds to the information interaction in response to the other user searching for the keyword in the designated application.

In some embodiments, the information interaction method further includes: showing the virtual resource determined according to the interaction completion condition to the user in response to the user setting the interaction completion condition.

According to some other embodiments of the present disclosure, an information interaction apparatus is provided, including: a memory; and a processor coupled to the memory, where the processor is configured to perform an information interaction method according to any one of the embodiments described above based on instructions stored in the memory.

According to some other embodiments of the present disclosure, a computer-readable storage medium is provided, where a computer program is stored on the computer-readable storage medium, and an information interaction method according to any one of the embodiments described above is realized when the computer program is executed by a processor.

According to some other embodiments of the present disclosure, a computer program product is provided, including an instruction, where the instruction, when executed by a processor, cause the processor to perform an information interaction method according to any one of the embodiments described above.

### BRIEF DESCRIPTION OF THE DRAWINGS

The drawings, which form a part of the description, illustrate embodiments of the present disclosure and, together with the description, serve to explain the principles of the present disclosure.

The present disclosure may be more clearly understood from the following detailed description with reference to the drawings:
Fig. 1 shows a flowchart of some embodiments of an information interaction method according to the present disclosure;
Figs. 2A-2D show schematic diagrams of some embodiments of a method for configuring an interaction completion condition according to the present disclosure;
Figs. 3A-3C show schematic diagrams of some embodiments of a method for feeding back information related to a virtual resource according to the present disclosure;
Fig. 4 shows a block diagram of some embodiments of an information interaction apparatus according to the present disclosure;
Fig. 5 shows a block diagram of some other embodiments of an information interaction apparatus according to the present disclosure;
Fig. 6 shows a block diagram of some further embodiments of an information interaction apparatus according to the present disclosure.

### DETAILED DESCRIPTION

Various exemplary embodiments of the present disclosure are now described in detail with reference to the drawings. It should be noted that the relative arrangement of components and steps, numerical expressions, and numerical values set forth in these embodiments do not limit the scope of the present disclosure unless otherwise specifically stated.

Meanwhile, it should be understood that, for the convenience of description, the sizes of the various parts shown in the drawings are not drawn in an actual proportional relationship.

The following description of at least one exemplary embodiment is actually only illustrative, and in no way serves as any limitation on the present disclosure and its application or use.

Technologies, methods, and devices known to those of ordinary skill in the related art may not be discussed in detail, but in appropriate cases, the technologies, methods, and devices should be regarded as a part of this specification.

In all the examples shown and discussed herein, any specific value should be construed as merely exemplary, rather than limiting. Therefore, other examples of the exemplary embodiments may have different values.

It should be noted that like reference numerals and letters denote like items in the following drawings, and thus, once an item is defined in one drawing, it is not necessary to discuss it further in subsequent drawings.

The inventors of the present disclosure find that the above related art has the following problem: it is often difficult for users to bear the sharing difficulty, and the participation in an information interaction is low, resulting in a poor effect of information sharing.

In view of this, the present disclosure provides an information interaction technical solution, which may increase the participation in the information interaction, thereby improving the effect of information sharing.

As described above, the user may obtain the virtual resource only by satisfying the interaction completion condition designated by the platform. However, there are differences in the ability of different users to complete an information interaction, and even the same user has different abilities to complete an information interaction in different time periods, and the platform cannot accurately identify the ability of each user in each time period. If the information interaction process under the interaction completion condition is long or difficult, the user may easily give up participating in the information interaction, resulting in a decline in the effect of information sharing.

In addition, another user may help the user complete the information interaction only by copying the shared password information and then opening the designated application. Most of the password information is long-length garbled codes, which may be blocked by another platform, resulting in the inability to complete information sharing; or the password information is overlapped by the other platform, and the other user needs to perform operations such as manual expansion and manual selection to copy the password information, resulting in high operation costs, low participation in the information interaction, and poor information sharing effects.

Moreover, the password information composed of garbled codes cannot transmit semantic information, and no meaningful information may be transmitted in the process of information sharing, resulting in a poor effect of information sharing.

To solve the above technical problems, the technical solution of the present disclosure allows the user who initiates an information interaction to set the completion condition of the information interaction, thereby avoiding the technical problem of low participation in the information interaction caused by difficulty in completing the information interaction, and improving the effect of information sharing. For example, the technical solution of the present disclosure may be implemented by the following embodiments.

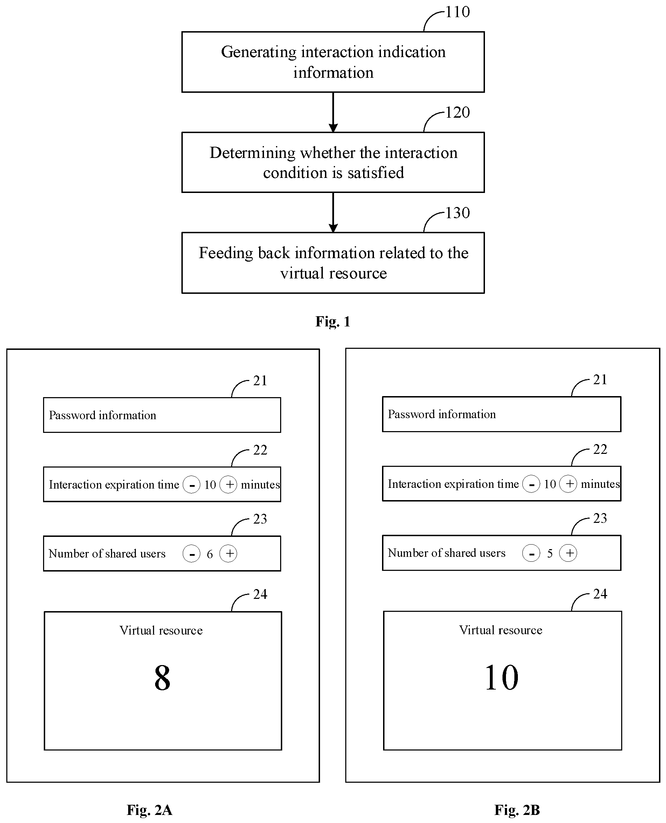

Fig. 1 shows a flowchart of some embodiments of an information interaction method according to the present disclosure.

As shown in Fig. 1, in step 110, interaction indication information is generated according to an interaction completion condition set by a user who initiates an information interaction.

In some embodiments, the information interaction may include sharing designated information with a plurality of other users. For example, the user may set the interaction completion condition according to the information sharing ability of the user; and the information sharing ability may include the number of the other users with whom the user may currently communicate, the intimacy between the user and the other users, and so on.

In some embodiments, the interaction completion condition includes at least one of a designated duration or a designated number. For example, the user may set the interaction completion condition as receiving responses from a designated number of other users within a designated duration after the user shares designated information with a plurality of other users.

In this way, the user who initiates the information interaction may be supported to flexibly adjust the difficulty by customizing the duration for completing sharing and the number of users who need to be shared with. Therefore, the interaction completion condition suitable for the user's own sharing state is generated, and the number of users participating in the information interaction is increased, thereby improving the effect of information sharing.

In some embodiments, the virtual resource is determined according to at least one of the designated duration or the designated number. For example, the amount of the virtual resource corresponding to the current interaction completion condition is determined based on the number of other users who need to be invited for the information interaction, the completion deadline, and so on. For example, the above technical solution may be implemented by the embodiments in Figs. 2A-2D.

Figs. 2A-2D show schematic diagrams of some embodiments of a method for configuring an interaction completion condition according to the present disclosure.

As shown in Fig. 2A, at an information interaction generation interface, a user is provided with a password information editing area 21, a duration configuration area 22, and a number configuration area 23.

The user may configure a designated duration in the duration configuration area 22 as a time limit condition for completing the information interaction, such as 5 minutes, 10 minutes, 20 minutes, etc.; and prompt information, such as "information interaction expiration time", is shown to the user in the duration configuration area 22. A time adjustment control may also be set in the duration configuration area 22, such as "-" and "+" controls in the duration configuration area 22, which are respectively used to shorten and lengthen the designated duration.

The user may configure a designated number in the number configuration area 23 as a number condition of participating users required for completing the information interaction, such as 5, 6, 8, etc.; and prompt information, such as "number of shared users", is shown to the user in the number configuration area 23. A number adjustment control may also be set in the number configuration area 23, such as "-" and "+" controls in the number configuration area 23, which are respectively used to decrease and increase the designated number.

In some embodiments, the virtual resource determined according to the interaction completion condition is shown to the user in response to the user setting the interaction completion condition. For example, as shown in Fig. 2A, it may be shown to the user in an information display area 24 that when the designated duration is 10 minutes, the designated number is 6, and the corresponding amount of the virtual resource is 8.

In some embodiments, the virtual resource corresponding to the current interaction completion condition may be determined based on the designated duration configured by the user in the duration configuration area 22 and the designated number configured by the user in the number configuration area 23.

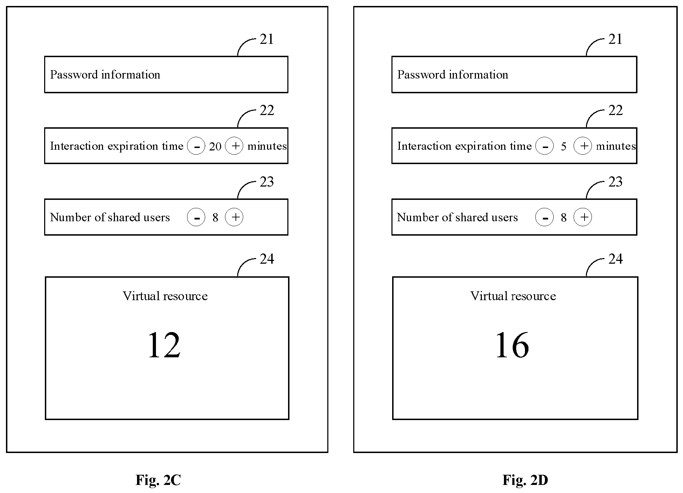

For example, in Fig. 2A, the designated duration is 10 minutes, the designated number is 6, and the corresponding amount of the virtual resource is 8; in Fig. 2B, the designated duration is 10 minutes, the designated number is 5, and the corresponding amount of the virtual resource is 10; in Fig. 2C, the designated duration is 20 minutes, the designated number is 8, and the corresponding amount of the virtual resource is 12; and in Fig. 2D, the designated duration is 5 minutes, the designated number is 8, and the corresponding amount of the virtual resource is 16.

In some embodiments, the interaction indication information includes password information for participating in the information interaction, and the password information includes a natural language field having designated semantic information. For example, the natural language field is set according to designated semantic information input by the user and intended to be transmitted to the other user.

In some embodiments, the virtual resource may also be determined based on different password information.

As shown in Fig. 2A, the user may input password information in the password editing area 21 for transmitting designated information to the other user. For example, the user may input "good things always happen to you" in the password editing area 21; and in response to the other user receiving the interaction indication information shared by the user, the password information may be shown to the other user, so as to achieve the purpose of sharing the designated information.

In some embodiments, the natural language field includes a keyword, and the natural language field is used to instruct the other user to search for the keyword in the designated application, so as to implement sharing of the designated information. For example, the password information is "please search for good luck in the XX application to receive the virtual resource", and "good luck" is the keyword.

In some embodiments, a display style of the keyword may be different from a display style of another word in the natural language field, so as to highlight the keyword. For example, the keyword may be displayed in a different color, font, etc. from the other word. In this way, the keyword information may be highlighted to improve the efficiency of information sharing.

In the above embodiments, the password information is changed from a garbled code to a natural language text with designated semantic information, and the user is supported to customize the password information, so that the password information may be given designated semantic information and the information dissemination effect is improved.

After the interaction indication information is generated by setting the interaction completion condition, the information interaction may be further processed through steps 120 and 130 in Fig. 1.

In step 120, it is determined whether the interaction completion condition is satisfied according to participation of another user in the information interaction in response to the user sending the interaction indication information to the other user.

In some embodiments, it is determined that the interaction completion condition is satisfied in response to at least one of: a number of participating users who participate in the information interaction among the other user being not less than the designated number, or the participating users participating in the information interaction within the designated duration.

For example, the designated duration set by the user is 10 minutes and the designated number set by the user is 6; and in response to more than 6 other users participating in the information interaction within 10 minutes after the user shares the interaction indication information with a plurality of other users, it is determined that the user completes the information interaction.

In some embodiments, it is determined that the other user responds to the information interaction in response to at least one of: the other user copying the password information and opening the designated application, or the other user searching for the password information in the designated application. For example, the password information includes information related to the designated application.

For example, two information interaction participation manners may be supported: after the other user copies the password information and opens the designated application, the designated application automatically identifies the password information, and it is determined that the other user successfully participates in the information interaction; and the other user searches for a designated field in the password information on the designated application, and it is determined that the other user successfully participates in the information interaction.

In this way, the participation manner of automatically identifying the password information meets the requirement of the user for quickly participating in the information interaction, and improves the efficiency of information sharing; and the participation manner of searching for the password information avoids the technical problem of the password information being blocked by the other platform (such as the instant messaging platform where the user shares the interaction indication information), improves the participation rate of the information interaction, and improves the effect of information sharing.

Moreover, the user may select a participation manner suitable for the user, and the participation in the information interaction is improved, thereby improving the effect of information sharing.

In some embodiments, it is determined that the other user responds to the information interaction in response to the other user searching for the natural language field in the designated application. For example, it is determined that the other user responds to the information interaction in response to the other user searching for the keyword in the designated application.

In the above embodiments, the user who initiates the information interaction may share the interaction indication information with the other user by sharing the keyword in the password information, and the other user may participate in the information interaction by searching for the keyword in the password information. In this way, the other user is not forced to copy and pastes the password information, the efficiency of information dissemination is improved, and the dissemination threshold is lowered, thereby improving the effect of information sharing.

In step 130, information related to a virtual resource corresponding to the interaction completion condition is fed back to the user in response to the interaction completion condition being satisfied. For example, the user may be shown the amount information of the virtual resource, and the ownership of the virtual resource is determined as the user, etc.

In the above embodiments, the user who initiates the information interaction may set the interaction completion condition, thereby avoiding the technical problem of low participation in the information interaction caused by difficulty in completing the information interaction, and improving the effect of information sharing.

In some embodiments, in response to the interaction completion condition being satisfied, not only the information related to the virtual resource corresponding to the user who initiates the information interaction is fed back to the user, but also information related to a virtual resource corresponding to a participating user is fed back to the participating user. In this way, the participation rate of the participating user in the information interaction may be improved, thereby improving the effect of information sharing.

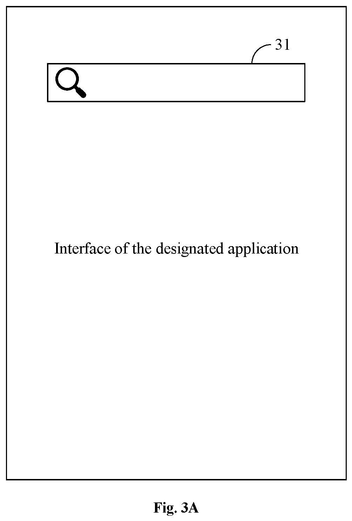

For example, the above technical solution may be implemented by the embodiments in Figs. 3A-3C.

Figs. 3A-3C show schematic diagrams of some embodiments of a method for feeding back information related to a virtual resource according to the present disclosure.

As shown in Fig. 3A, a user shares set password information "please search for good luck in the designated application to receive the virtual resource" with the other user. In one aspect, the other user may copy the password information, and in response to the other user opening an interface of the designated application, it is determined that the other user successfully participates in the information interaction; and in another aspect, the other user may directly open the interface of the designated application, and in response to the other user searching for the keyword "good luck" indicated by the password information in a search area 31, it is determined that the other user successfully participates in the information interaction.

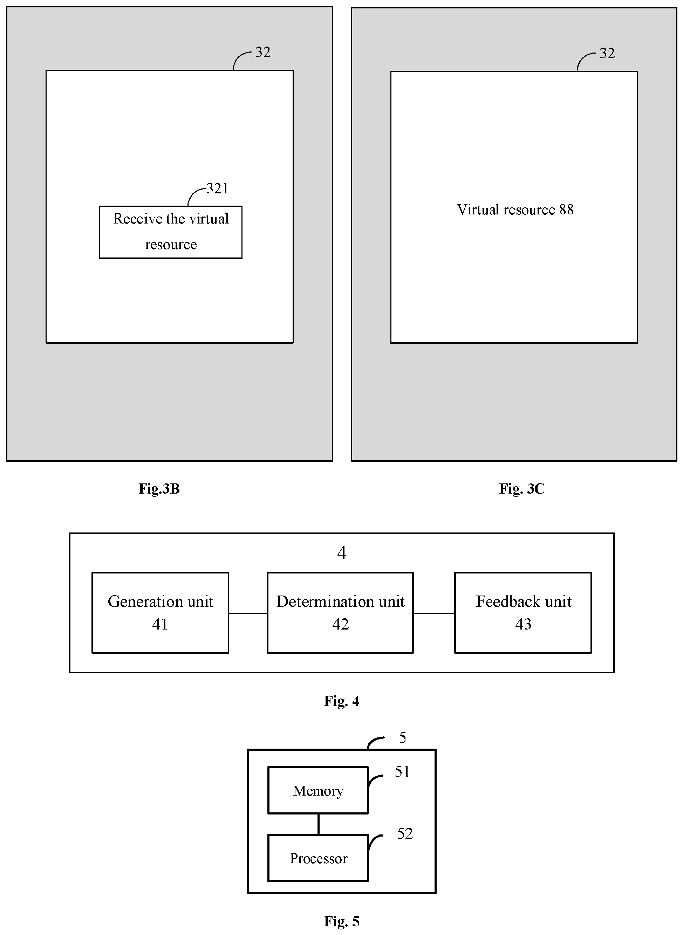

As shown in Fig. 3B, in response to more other users than the designated number successfully participating in the information interaction within the designated duration, it is determined that the user who initiates the information interaction achieves the set interaction completion condition; and in response to the user achieving the interaction completion condition, a pop-up window 32 is shown to the user to prompt that the information interaction is completed. A virtual resource receiving control 321 may be provided in the pop-up window 32 for the user to receive the virtual resource corresponding to the interaction completion condition.

As shown in Fig. 3C, in response to the user selecting the virtual resource receiving control 321 in Fig. 3B,the amount of the received virtual resource is displayed in the pop-up window 32.

Fig. 4 shows a block diagram of some embodiments of an information interaction apparatus according to the present disclosure.

As shown in Fig. 4, the information interaction apparatus 4 includes: a generation unit 41 configured to generate interaction indication information according to an interaction completion condition set by a user who initiates an information interaction; a determination unit 42 configured to determine whether the interaction completion condition is satisfied according to participation of another user in the information interaction in response to the user sending the interaction indication information to the other user; and a feedback unit 43 configured to feed back information related to a virtual resource corresponding to the interaction completion condition to the user in response to the interaction completion condition being satisfied.

In some embodiments, the interaction completion condition includes at least one of a designated duration or a designated number; and the determination unit 42 determines that the interaction completion condition is satisfied in response to at least one of: a number of participating users who participate in the information interaction among the other user being not less than the designated number, or the participating users participating in the information interaction within the designated duration.

In some embodiments, the virtual resource is determined according to at least one of the designated duration or the designated number.

In some embodiments, the interaction indication information includes password information for participating in the information interaction, and the password information includes a natural language field having designated semantic information.

In some embodiments, the natural language field is generated according to designated semantic information input by the user.

In some embodiments, the determination unit 42 determines that the other user responds to the information interaction in response to at least one of: the other user copying the password information and opening a designated application, or the other user searching for the password information in the designated application.

In some embodiments, the determination unit 42 determines that the other user responds to the information interaction in response to the other user searching for the natural language field in the designated application.

In some embodiments, the password information includes information related to the designated application.

In some embodiments, the natural language field includes a keyword, and the natural language field is used to instruct the other user to search for the keyword in the designated application; and the determination unit 42 determines that the other user responds to the information interaction in response to the other user searching for the keyword in the designated application.

In some embodiments, the information interaction method further includes: showing the virtual resource determined according to the interaction completion condition to the user in response to the user setting the interaction completion condition.

Fig. 5 shows a block diagram of some other embodiments of an information interaction apparatus according to the present disclosure.

As shown in Fig. 5, the information interaction apparatus 5 in this embodiment includes: a memory 51 and a processor 52 coupled to the memory 51, where the processor 52 is configured to perform the information interaction method according to any one of the embodiments of the present disclosure based on instructions stored in the memory 51.

The memory 51 may include, for example, a system memory, a fixed non-volatile storage medium, etc. The system memory stores, for example, an operating system, an application program, a boot loader program, a database, and other programs.

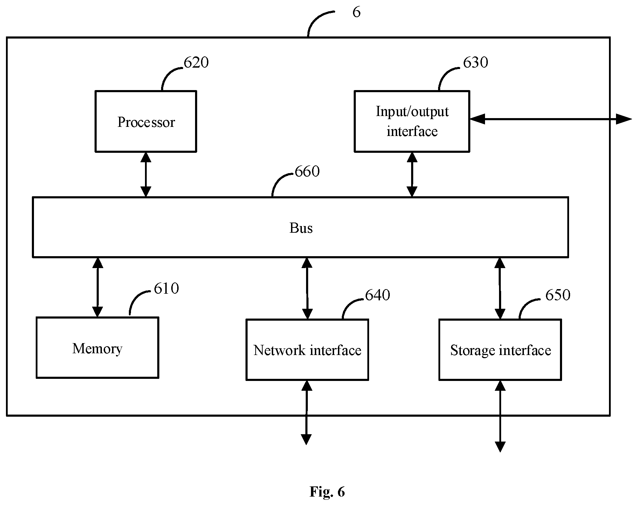

Fig. 6 shows a block diagram of some further embodiments of an information interaction apparatus according to the present disclosure.

As shown in Fig. 6, the information interaction apparatus 6 in this embodiment includes: a memory 610 and a processor 620 coupled to the memory 610, where the processor 620 is configured to perform the information interaction method according to any one of the embodiments described above based on instructions stored in the memory 610.

The memory 610 may include, for example, a system memory, a fixed non-volatile storage medium, etc. The system memory stores, for example, an operating system, an application program, a boot loader program, and other programs.

The information interaction apparatus 6 may further include an input/output interface 630, a network interface 640, a storage interface 650, and so on. These interfaces 630, 640, 650, and the memory 610 and the processor 620 may be connected, for example, through a bus 660. The input/output interface 630 provides a connection interface for input/output devices such as a display, a mouse, a keyboard, a touch screen, a microphone, a sound box etc. The network interface 640 provides a connection interface for various networked devices. The storage interface 650 provides a connection interface for external storage devices such as a SD card, a USB flash disk, and so on.

It should be understood by those skilled in the art that the embodiments of the present disclosure may be provided as a method, a system, or a computer program product. Therefore, the present disclosure may take a form of an entire hardware embodiment, an entire software embodiment, or an embodiment combining both hardware and software aspects. Moreover, the present disclosure may take a form of a computer program product implemented on one or more computer-usable non-transitory storage media having computer-usable program code embodied therein, including but not limited to a disk memory, a CD-ROM, an optical memory, etc.

So far, the information interaction method, the information interaction apparatus, and the computer-readable storage medium according to the present disclosure have been described in detail. To avoid obscuring the concept of the present disclosure, some details commonly known in the art are not described. Those skilled in the art may fully understand how to implement the technical solution disclosed herein based on the above description.

The method and system of the present disclosure may be implemented in many ways. For example, the method and system of the present disclosure may be implemented by software, hardware, firmware, or any combination of software, hardware, and firmware. The above order of steps for the method is only for illustration, and the steps of the method of the present disclosure are not limited to the order specifically described above, unless otherwise specifically stated. In addition, in some embodiments, the present disclosure may also be implemented as programs recorded in a recording medium, where these programs include machine-readable instructions for implementing the method according to the present disclosure. Therefore, the present disclosure also covers the recording medium storing the programs for performing the method according to the present disclosure.

Although some specific embodiments of the present disclosure have been described in detail by way of examples, those skilled in the art should understand that the above examples are only for illustration, rather than limiting the scope of the present disclosure. Those skilled in the art should understand that the above embodiments may be modified without departing from the scope and spirit of the present disclosure. The scope of the present disclosure is defined by the appended claims.

## Claims

1. An information interaction method, comprising:
generating interaction indication information according to an interaction completion condition set by a user who initiates an information interaction;
determining whether the interaction completion condition is satisfied according to participation of another user in the information interaction in response to the user sending the interaction indication information to the other user; and
feeding back information related to a virtual resource corresponding to the interaction completion condition to the user in response to the interaction completion condition being satisfied.

2. The information interaction method of claim 1, wherein the interaction completion condition comprises at least one of a designated duration or a designated number;
the determining whether the interaction completion condition is satisfied according to the participation of the other user in the information interaction comprises:
determining that the interaction completion condition is satisfied in response to at least one of: a number of participating users who participate in the information interaction among the other user being not less than the designated number, or the participating users participating in the information interaction within the designated duration.

3. The information interaction method of claim 2, wherein the virtual resource is determined according to at least one of the designated duration or the designated number.

4. The information interaction method of any one of claims 1-3, wherein the interaction indication information comprises password information for participating in the information interaction, and the password information comprises a natural language field having designated semantic information.

5. The information interaction method of claim 4, wherein the natural language field is generated according to designated semantic information input by the user.

6. The information interaction method of claim 4 or 5, wherein the determining whether the interaction completion condition is satisfied according to the participation of the other user in the information interaction comprises:
determining that the other user responds to the information interaction in response to at least one of: the other user copying the password information and opening a designated application, or the other user searching for the password information in the designated application.

7. The information interaction method of claim 6, wherein the determining that the other user responds to the information interaction comprises:
determining that the other user responds to the information interaction in response to the other user searching for the natural language field in the designated application.

8. The information interaction method of claim 6 or 7, wherein the password information comprises information related to the designated application.

9. The information interaction method of any one of claims 4-8, wherein the natural language field comprises a keyword, and the natural language field is configured to instruct the other user to search for the keyword in a designated application;
the determining whether the interaction completion condition is satisfied according to the participation of the other user in the information interaction comprises:
determining that the other user responds to the information interaction in response to the other user searching for the keyword in the designated application.

10. The information interaction method of any one of claims 1-9, further comprising:
showing the virtual resource determined according to the interaction completion condition to the user in response to the user setting the interaction completion condition.

11. An information interaction apparatus, comprising:
a generation unit configured to generate interaction indication information according to an interaction completion condition set by a user who initiates an information interaction;
a determination unit configured to determine whether the interaction completion condition is satisfied according to participation of another user in the information interaction in response to the user sending the interaction indication information to the other user; and
a feedback unit configured to feed back information related to a virtual resource corresponding to the interaction completion condition to the user in response to the interaction completion condition being satisfied.

12. An information interaction apparatus, comprising:
a memory; and
a processor coupled to the memory and configured to perform an information interaction method of any one of claims 1-10 based on instructions stored in the memory.

13. A computer-readable storage medium, on which a computer program is stored, and the computer program, when executed by a processor, realizes an information interaction method of any one of claims 1-10.

14. A computer program product, comprising an instruction, wherein the instruction, when executed by a processor, cause the processor to perform an information interaction method of any one of claims 1-10.
